# EUROPÄISCHE PATENTSCHRIFT

(11) **EP 3 012 123 B1**
(45) Veröffentlichungstag und Bekanntmachung des Hinweises auf die Patenterteilung: **10.07.2019**
(21) Anmeldenummer: 15179617.4
(22) Anmeldetag: 04.08.2015
(51) Int. Cl.: B60C 15/00, B60C 15/06

(54) **FAHRZEUGLUFTREIFEN**
PNEUMATIC TYRES FOR A VEHICLE
PNEUMATIQUES DE VÉHICULE

(30) Priorität: 21.10.2014 DE 102014221312
(43) Veröffentlichungstag der Anmeldung: 27.04.2016
(73) Patentinhaber: Continental Reifen Deutschland GmbH, 30165 Hannover (DE)
(72) Erfinder: Heyden, Arne, 30167 Hannover (DE); Metge, Axel, 30179 Hannover (DE); Jenke, Roland, 30823 Garbsen (DE); Schaperjahn, Elke, 30459 Hannover (DE)
(74) Vertreter: Finger, Karsten

(56) Entgegenhaltungen:
- EP-A1- 2 740 615
- WO-A1-2014/042035
- WO-A1-2014/156283

## Beschreibung

Die Erfindung betrifft einen Fahrzeugluftreifen für einen PKW, Van oder Light Truck mit einer Radialkarkasse und mit zwei Wulstbereichen, welche wenigstens je einen Wulstkern, einen dem Wulstkern aufsitzenden Wulstkernreiter und einen den Wulstbereich nach axial außen begrenzenden Wulststreifen aufweisen, wobei die Radialkarkasse von axial innen nach axial außen um die Wulstkerne geführt ist und in einem Karkasshochschlag endet und wobei die im Wulstbereich angeordneten Bauteile Wulstkernreiter, Radialkarkasse und Wulststreifen bestimmte Shore A-Härten aufweisen.

Kautschukmischungen von Reifenbauteilen weisen bestimmte Shore A-Härten auf. Höhere Shore A-Härten beschreiben härtere Kautschukmischungen, während niedrigere Shore A-Härten weichere Kautschukmischungen beschreiben.

Der Aufbau eines Wulstes für PKW-, Van- oder Light Truck-Reifen ist dem Fachmann hinreichend bekannt.

Ein Fahrzeugluftreifen gemäß dem Oberbegriff ist sowohl aus der WO 2014/156283 A1 als auch aus der WO 2014/042035 A1 bekannt geworden. Die Härten der Kautschukmischungen von Bauteile im Wulstbereich des Fahrzeugluftreifens liegen nahe beieinander.

Aus der DE 1 964 575 A ist ein PKW-Reifen bekannt geworden, der besonders gestaltete Wulstbereiche aufweist, um bei Überlastbedingungen einen Ausfall des Reifens im Bereich des Wulstes zu vermeiden. In der vorgenannten Druckschrift wird beschrieben, dass die im Wulstbereich angeordneten Bauteile eine glatte Veränderung der Steifigkeit aufweisen, d.h., dass eine graduelle Abnahme der Steifigkeit vom Bereich der Wülste in Richtung auf die Seitenwandbereiche erfolgt. Über konkrete Werte der Abnahme der Steifigkeit in Bezug auf die im Wulstbereich angeordneten Bauteile schweigt sich die vorgenannte Druckschrift jedoch aus.

Bei schwierigen Straßen- und/ oder Ausladungsverhältnissen, den sogenannten "overload"-Bedingungen, neigt besonders der Wulstbereich des Reifens zu mechanischen Ausfallerscheinungen. Bisher begegnet man diesem mechanischen Ausfall damit, zur Verstärkung des Wulstbereiches zusätzliche Verstärkungslagen in diesen einzubringen. Jedoch ist hierdurch der Rollwiderstand des Reifens nachteilig beeinflusst. Zudem steigt die Gefahr des thermisch bedingten Ausfalls des Reifens.

Es ist die Aufgabe der Erfindung, einen Fahrzeug(luft-)reifen für PKWs, Vans oder Light Trucks zur Verfügung zu stellen, der auch bei schwierigen Straßen- und/ oder Ausladungsverhältnissen eine verbesserte Haltbarkeit aufweist und der verringert zu einem mechanischen und thermischen Ausfall neigt.

Die Aufgabe wird gelöst, indem die Shore A-Härte von axial unmittelbar benachbart im Wulstbereich angeordneten Bauteilen nicht mehr als 5 Shore A-Härtepunkte voneinander abweicht und indem die Shore A-Härten von axial benachbart im Wulstbereich angeordneten Bauteilen beginnend vom Wulstkernreiter zur Außenseite der Seitenwand steigend sind oder fallend sind.

Wenn die Shore A-Härte eines Bauteiles beschrieben wird, ist immer die Shore A-Härte der Kautschukmischung dieses Bauteiles gemeint. Dabei kann das Bauteil vollständig aus einer oder mehreren Kautschukmischung bestehen oder das Bauteil kann eine gummierte Festigkeitsträger aufweisende Lage sein.

Erfindungsgemäß ist ein Fahrzeugreifen für PKWs, Vans oder Light Trucks zur Verfügung gestellt, der auch bei sogenannten overload-Bedingungen eine verbesserte Haltbarkeit aufweist. Dabei ist wesentlich, dass diese verbesserte Haltbarkeit nicht durch den Einsatz von zusätzlichen Verstärkungslagen im Wulstbereich erzielt ist. Im Gegenteil: lediglich die Kautschukmischungen der bereits im Stand der Technik im Wulst eingesetzten Bauteile sind in Bezug auf ihre Shore A-Härten optimiert. Dabei weisen zwei axial nebeneinander angeordnete Bauteile im Wulstbereich Shore A-Härten auf, die nicht mehr als 5 Shore A-Härtepunkte voneinander abweichen. Das bedeutet, dass unmittelbar benachbarte Bauteile gleiche oder innerhalb von 5 Punkten steigende Shore A-Härten aufweisen können. Wesentlich ist, dass die Shore A-Härten vom Wulstkernreiter zur Außenseite der Seitenwand hin steigend sind oder fallend sind - in dem Sinne, dass der Wulstkernreiter eine niedrigere Shore A-Härte als der Wulststreifen, der axial außen in Bezug auf den Wulstkernreiter angeordnet ist, aufweist. Die Erfindung ist daher ohne Konstruktionsanpassungen auf heute bereits eingesetzte Reifen anwendbar. Die Erfinder vermuten, dass der vorteilhafte erfindungsgemäße Effekt durch eine Verminderung von Steifigkeitssprüngen im Wulstbereich bedingt ist. Bei der Einfederung des Reifens unter hoher Last wird die Seitenwand verformt, der untere Seitenwandbereich wird um das Felgenhorn gebogen und die Reifenbauteile in der unteren Seitenwand werden einer Scherbelastung ausgesetzt. Bei entsprechend hoher Geschwindigkeit im Betrieb ergibt sich eine sehr dynamische, schwellende bis wechselnde Belastung. Die gleichmäßige Verteilung der Steifigkeit aller Bauteile führt dazu, daß bei der Verformung (Scherung) der Seitenwand kein Bauteil die Hauptlast der Verformung (Scherung) übernehmen muß und dann unter dieser Belastung ausfällt, während angrenzende Bauteile weit unter ihrer Belastungsgrenze verformt (geschert) werden.

Die Shore A-Härte wird ermittelt nach DIN ISO 7619.
"Axial benachbarte Bauteile" meint Bauteile, die - in axialer Richtung des Fahrzeugreifens betrachtet - nebeneinander angeordnet sind.
"Wulstverstärker" meint eine gummierte Festigkeitsträger aufweisende Lage, welche im Wulstbereich axial außen in Bezug auf den Karkasshochschlag angeordnet ist und den Wulstkern nicht umläuft.
"Polsterstreifen" meint eine vollständig aus Kautschuk bestehende Lage, welche im Wulstbereich axial außen in Bezug auf den Karkasshochschlag angeordnet ist und den Wulstkern nicht umläuft.

In einer anderen Ausführung der Erfindung sind die Shore A-Härten von axial benachbart im Wulstbereich angeordneten Bauteilen, beginnend vom Wulstkernreiter zur Außenseite der Seitenwand fallend, derart, dass der Wulstkernreiter eine Härte von 80 Shore A aufweist und der Wulststreifen eine Härte von 75 Shore A aufweist, oder bevorzugt, dass der Wulstkernreiter eine Härte von 70 Shore A aufweist und der Wulststreifen eine Härte von 60 Shore A aufweist. Das bedeutet, dass unmittelbar benachbarte Bauteile gleiche oder innerhalb von 5 Punkten fallende Shore A-Härten aufweisen können. Wesentlich ist, dass die Shore A-Härten vom Wulstkernreiter zur Außenseite der Seitenwand hin fallend sind - in dem Sinne, dass der Wulstkernreiter eine größere Shore A-Härte als der Wulststreifen, der axial außen in Bezug auf den Wulstkernreiter angeordnet ist, aufweist.

Vorteilhaft ist es, wenn die Radialkarkasse ein- oder zweilagig ausgeführt ist, wobei bei der zweilagigen Ausführung vorzugsweise beide Lagen die gleiche Shore A-Härte aufweisen.

Die einlagige Radialkarkasse weist eine übliche, in einem Karkasshochschlag endende Konstruktion auf, wobei das Ende des Karkasshochschlages vorzugsweise auf Höhe der Seitenwand oberhalb des oberen Endes des Wulstkernreiters und unterhalb und entfernt von dem Gürtel liegt oder weist vorzugsweise eine sogenannte "C-Lagenkonstruktion" auf, bei das Ende des Karkasshochschlages die komplette Reifenseitenwand hochgeführt ist und bis unter die Gürtelkanten reicht.
Die zweilagige Radialkarkasse weist eine einlagige Radialkarkassenkonstruktion auf, bei der der Karkasshochschlag um die Kerne von innen nach außen herumgeführt ist und bei der das Ende des Karkasshochschlages auf Höhe der Seitenwand oberhalb des oberen Endes des Wulstkernreiters liegt und bei der eine zweite Karkasslage radial außen auf der ersten Karkasslage aufgebracht ist, die jedoch den Karkasshochschlag der ersten Karkasslage abdeckt und die Wulstkerne nicht umläuft, sondern auf Höhe des Wulstkernes endet.
Die nachfolgend aufgeführten Ausführungsbeispiele weisen eine der vorgenannten Karkasskonstruktionen auf.

Zweckmäßig ist es, wenn nur ein Wulstverstärker zwischen der Radialkarkasse und dem Wulststreifen angeordnet ist. Zwischen der Radialkarkasse und dem Wulststreifen ist alleinig ein Wulstverstärker und keine anderen Bauteile angeordnet.
Zweckmäßig ist es, wenn ein oder zwei Polsterstreifen zwischen dem Wulstverstärker und der Karkasse angeordnet sind. Zwischen der Radialkarkasse und dem Wulstverstärker sind alleinig ein oder zwei Polsterstreifen und keine anderen Bauteile angeordnet.

Sind zwei Polsterstreifen angeordnet, weisen diese vorteilhafterweise die gleiche Shore A-Härte auf.
Die nachfolgende Tabelle zeigt fünf Ausführungsvarianten des Wulstbereiches eines erfindungsgemäßen PKW-,Van- oder Lighttruck-Reifens. Die Bauteile sind von links nach rechts entsprechend ihrer Anordnung im rechten Wulstbereich des Reifensquerschnittes von Apex in Richtung Außenseite des Reifens aufgeführt. Das Kreuz gibt an, dass dieses Bauteil vorhanden/ verwirklicht ist, die Zahl neben dem Kreuz gibt die Shore A-Härte des betreffenden Bauteiles an. "-" gibt an, dass das betreffende Bauteil nicht vorhanden/verwirklicht ist.

**Tabelle**

| Variante | Wulstkernreiter | Karkasse | Polstersteifen 1 | Polsterstreifen 2 | Wulstverstärker | Wulststreifen |
|---|---|---|---|---|---|---|
| 1 | X 80 | X 75 | X 75 | - | X 75 | X 75 |
| 2 | X 70 | X 65 | X 65 | - | X 65 | X 60 |
| 3 | X 80 | X 75 | X 75 | - | - | X 75 |
| 4 | X 80 | X 75 | X 75 | X 75 | - | X 75 |
| 5 | X 80 | X 75 | - | - | X 75 | X 75 |

Weitere Merkmale, Vorteile und Einzelheiten der Erfindung werden nun anhand von Zeichnungen, die schematische Ausführungsbeispiele darstellen, näher erläutert. Dabei zeigen die
Fig. 1 einen hälftigen Querschnitt durch einen erfindungsgemäßen PKW-Reifen;
Fig. 2 einen hälftigen Querschnitt durch einen anderen erfindungsgemäßen PKW-Reifen;
Fig. 3 einen hälftigen Querschnitt durch einen weiteren erfindungsgemäßen PKW-Reifen;
Fig. 4 einen hälftigen Querschnitt durch einen anderen weiteren erfindungsgemäßen PKW-Reifen.

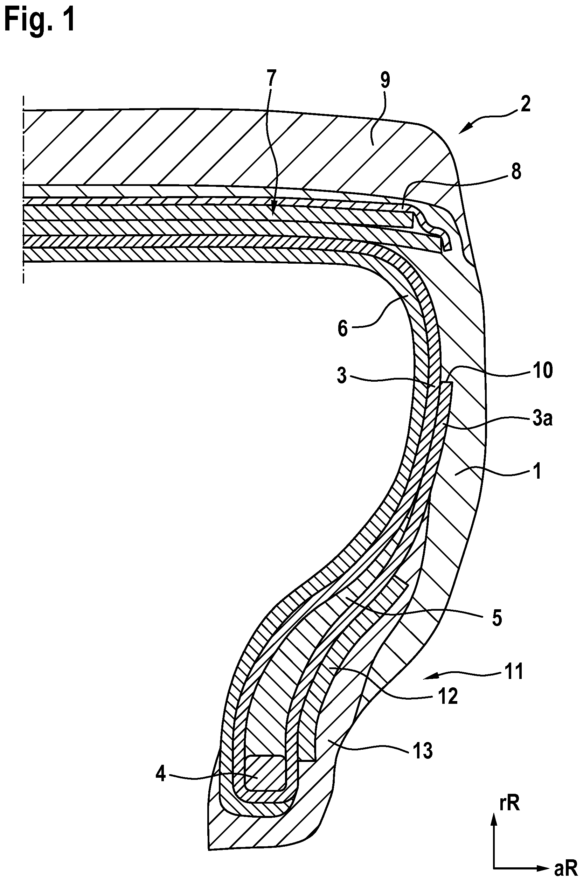

Die Fig. 1 zeigt einen hälftigen Querschnitt eines erfindungsgemäßen Fahrzeugluftreifens, hier eines PKW-Luftreifens radialer Bauart. Der Reifen weist eine übliche Standardkonstruktion auf, mit zwei Seitenwänden 1, einem Kronenbereich 2, mit einer Karkasse aus einer Karkasslage 3, welche die Wulstkerne 4 und die den Wulstkernen 4 aufsitzenden Wulstkernreiter 5 von axial innen nach axial außen umläuft und in einem Karkasshochschlag 3a endet, mit einer luftdicht ausgeführten Innenschicht 6, einem zweilagigen Gürtel 7, welcher durch eine Gürtelbandage 8 abgedeckt ist und einem Laufstreifen 9. Das Ende des Karkasshochschlages 10 liegt oberhalb des Wulstkernreiters 5 auf Höhe der Seitenwand 1.

Der Wulstbereich 11 besteht -vom Wulstkernreiter 5 betrachtet nach axial außen- aus den folgenden Bauteilen: Wulstkernreiter 5, Karkasshochschlag 3a, Wulstverstärker12 und Wulststreifen 13. Der Wulstverstärker 12 weist textile Festigkeitsträger auf und beginnt mit seinem unteren Ende auf Höhe des Wulstkernes und reicht mit seinem oberen Ende bis in das obere Drittel des Wulstkernreiters 5.
Die Shore A-Härten von den axial benachbart im Wulstbereich 1 angeordneten Bauteilen 5, 3a, 12, 13 entsprechen denen der in der Tabelle, Variante 5 dargestellten Härten: Wulstkernreiter 5: 80 Shore A, Karkasshochschlag (Karkasse): 75 Shore A, Wulsterstärker: 75 Shore A, Wulststreifen: 75 Shore A. Die Shore A-Härte von axial unmittelbar benachbart im Wulstbereich 11 angeordneten Bauteilen weicht nicht mehr als 5 Shore A-Härtepunkte voneinander ab und die Shore A-Härten von axial benachbart im Wulstbereich 11 angeordneten Bauteilen beginnend vom Wulstkernreiter 5 zur Außenseite der Seitenwand 1 sind fallend.

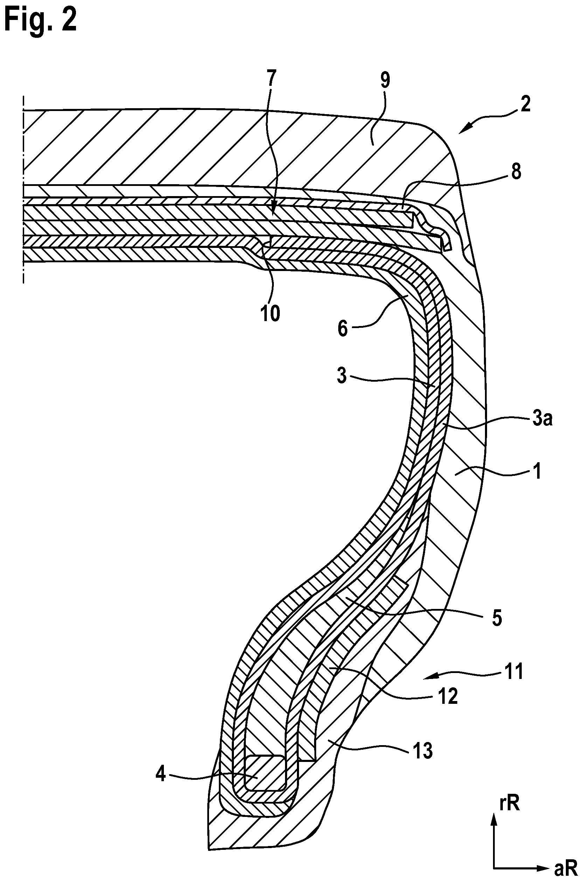

Die Fig. 2 zeigt einen hälftigen Querschnitt durch einen anderen erfindungsgemäßen PKW-Reifen. Der PKW-Reifen der Fig. 2 unterscheidet sich darin von dem PKW-Reifen der Fig. 1, dass die einlagige Karkasse 3 eine sogenannte C-Lagenkonstruktion aufweist. Bei einer C-Lagenkonstruktion ist der Karkasshochschlag 3a über die gesamte Höhe der Seitenwand 1 geführt und das Ende des Karkasshochschlages 3a liegt unter dem Gürtel 7. Die Shore A-Härten im Wulstbereich 2 entsprechen denen der Variante 3 der Tabelle.

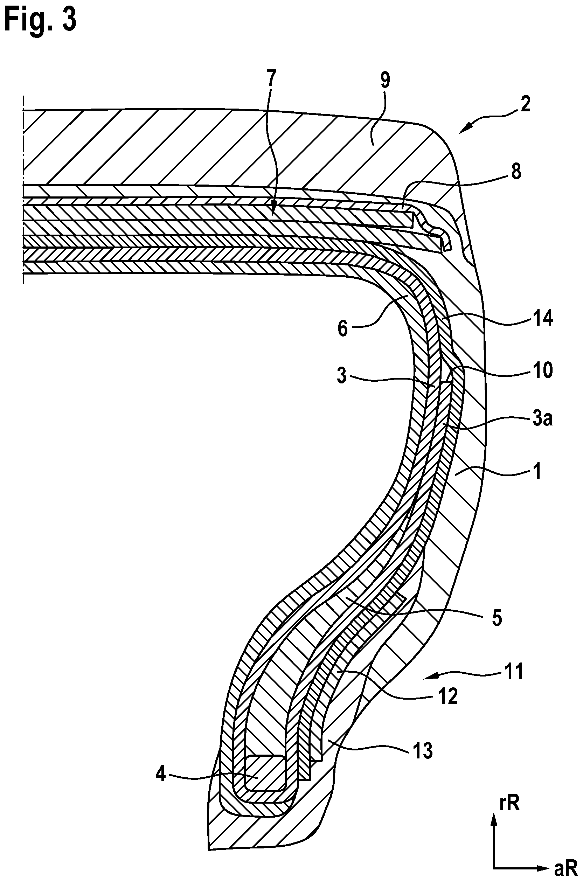

Die Fig. 3 zeigt einen hälftigen Querschnitt durch einen weiteren erfindungsgemäßen PKW-Reifen. Der PKW-Reifen der Fig. 3 unterscheidet sich darin von dem PKW-Reifen der Fig. 1, dass zusätzlich zu der Karkasslage 3 eine zweite, radial außen auf der Karkasslage 3 aufliegende Karkasslage 14 angeordnet ist. Die zweite Karkasslage 14 durchläuft den Kronenbereich 2 und die Seitenwände 1, liegt auf dem Karkasshochschlag 3a der ersten Karkasslage 3 auf, umläuft die Wulstkerne 4 nicht, sondern endet auf Höhe dieser. Die Shore A-Härten im Wulstbereich 11 entsprechen denen der Variante 3 der Tabelle.

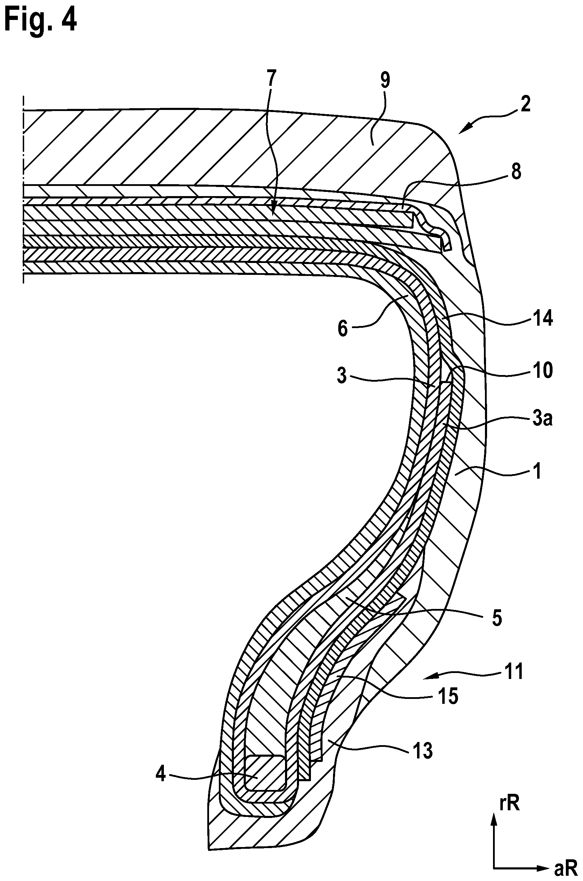

Die Fig. 4 zeigt einen hälftigen Querschnitt durch einen anderen weiteren erfindungsgemäßen PKW-Reifen. Der PKW-Reifen der Fig. 4 unterscheidet sich darin von dem PKW-Reifen der Fig. 4, dass anstatt des Wulstverstärkers der Fig. 3 ein Polsterstreifen 15 angeordnet ist und dass die Shore A-Härten im Wulstbereich 2 denen der Variante 3 der Tabelle entsprechen.

### Bezugszeichenliste

- 1: Seitenwand
- 2: Kronenbereich
- 3: Karkasslage
- 3a: Karkasshochschlag
- 4: Wulstkern
- 5: Wulstkernreiter
- 6: Innenschicht
- 7: Gürtel
- 8: Gürtelbandage
- 9: Laufstreifen
- 10: Ende des Karkasshochschlages
- 11: Wulstbereich
- 12: Wulstverstärker
- 13: Wulststreifen
- 14: Zweite Karkasslage
- 15: Polsterstreifen
- rR: radiale Richtung
- aR: axiale Richtung

## Patentansprüche

1. Fahrzeugluftreifen für einen PKW, Van oder Light Truck mit einer Radialkarkasse (3, 3a, 14) und mit zwei Wulstbereichen (11), welche wenigstens je einen Wulstkern (4), einen dem Wulstkern (4) aufsitzenden Wulstkernreiter (5) und einen den Wulstbereich (11) nach axial außen begrenzenden Wulststreifen (13) aufweisen, wobei die Radialkarkasse (3, 14) von axial innen nach axial außen um die Wulstkerne (4) geführt ist und in einem Karkasshochschlag (3a) endet und wobei die im Wulstbereich (11) angeordneten Bauteile Wulstkernreiter (5), Radialkarkasse (3, 3a, 14) und Wulststreifen (13) bestimmte Shore A-Härten aufweisen,
**dadurch gekennzeichnet, dass** die Shore A-Härte von axial unmittelbar benachbart im Wulstbereich (11) angeordneten Bauteilen (3, 3a, 5, 12, 13, 14, 15) nicht mehr als 5 Shore A-Härtepunkte voneinander abweicht und dass die Shore A-Härten von axial benachbart im Wulstbereich (11) angeordneten Bauteilen (3, 3a, 5, 12, 13, 14, 15) beginnend vom Wulstkernreiter (5) zur Außenseite der Seitenwand (1) steigend sind oder fallend sind.

2. Fahrzeugluftreifen nach Anspruch 1, **dadurch gekennzeichnet, dass** die Shore A-Härten von axial benachbart im Wulstbereich (11) angeordneten Bauteilen (3, 3a, 5, 12, 13, 14, 15), beginnend vom Wulstkernreiter (5) zur Außenseite der Seitenwand (1) derart fallend sind, dass der Wulstkernreiter (5) eine Härte von 80 Shore A aufweist und der Wulststreifen (13) eine Härte von 75 Shore A aufweist, oder bevorzugt, dass der Wulstkernreiter (5) eine Härte von 70 Shore A aufweist und der Wulststreifen (13) eine Härte von 60 Shore A aufweist.

3. Fahrzeugluftreifen nach Anspruch 1 oder 2, **dadurch gekennzeichnet, dass** die Shore A-Härten von allen im Wulstbereich (11) angeordneten Bauteilen (3, 3a, 5, 12, 13, 14, 15), beginnend vom Wulstkernreiter (5) zur Außenseite der Seitenwand (1) hin, in einem Größenbereich von +/- 5 Shore A-Härtepunkten liegen, vorzugsweise in einem Härtebereich von 80 - 75 Shore A.

4. Fahrzeugluftreifen nach Anspruch 1 oder 2, **dadurch gekennzeichnet, dass** die Radialkarkasse (3, 14) ein- oder zweilagig ausgeführt ist, wobei bei der zweilagigen Ausführung vorzugsweise beide Lagen (3, 14) die gleiche Shore A-Härte aufweisen.

5. Fahrzeugluftreifen nach einem der Ansprüche 1 bis 4, **dadurch gekennzeichnet, dass** nur ein Wulstverstärker (12) zwischen der Radialkarkasse (3, 14) und dem Wulststreifen (13) angeordnet ist.

6. Fahrzeugluftreifen nach einem der Ansprüche 1 bis 5, **dadurch gekennzeichnet, dass** ein oder zwei Polsterstreifen (15) zwischen dem Wulstverstärker (12) und der Karkasse (3, 14) angeordnet sind.

## Claims

1. Pneumatic vehicle tyre for a passenger car, van or light truck, having a radial carcass (3, 3a, 14) and having two bead regions (11), which at least each have a bead core (4), a bead apex (5) sitting on the bead core (4), and a bead strip (13) bounding the bead region (11) axially towards the outside, wherein the radial carcass (3, 14) is guided around the bead cores (4) from axially on the inside to axially on the outside and ends in a carcass turnup (3a), and wherein the components, arranged in the bead region (11), of bead apex (5), radial carcass (3, 3a, 14) and bead strip (13) have particular Shore A hardnesses,
**characterized in that** the Shore A hardnesses of components (3, 3a, 5, 12, 13, 14, 15) arranged axially immediately adjacently in the bead region (11) differ from one another by no more than 5 Shore A hardness points, and **in that** the Shore A hardnesses of components (3, 3a, 5, 12, 13, 14, 15) arranged axially adjacently in the bead region (11) increase or decrease starting from the bead apex (5) to the outer side of the sidewall (1).

2. Pneumatic vehicle tyre according to Claim 1, **characterized in that** the Shore A hardnesses of components (3, 3a, 5, 12, 13, 14, 15) arranged axially adjacently in the bead region (11) decrease starting from the bead apex (5) to the outer side of the sidewall (1) such that the bead apex (5) has a hardness of 80 Shore A and the bead strip (13) has a hardness of 75 Shore A, or preferably such that the bead apex (5) has a hardness of 70 Shore A and the bead strip (13) has a hardness of 60 Shore A.

3. Pneumatic vehicle tyre according to Claim 1 or 2, **characterized in that** the Shore A hardnesses of all components (3, 3a, 5, 12, 13, 14, 15) arranged in the bead region (11), starting from the bead apex (5) towards the outer side of the sidewall (1), lie in a value range of +/- 5 Shore A hardness points, preferably in a hardness range of 80-75 Shore A.

4. Pneumatic vehicle tyre according to Claim 1 or 2, **characterized in that** the radial carcass (3, 14) is embodied in a one- or two-ply manner, wherein, in the two-ply embodiment, preferably both plies (3, 14) have the same Shore A hardness.

5. Pneumatic vehicle tyre according to one of Claims 1 to 4, **characterized in that** only one bead reinforcement (12) is arranged between the radial carcass (3, 14) and the bead strip (13).

6. Pneumatic vehicle tyre according to one of Claims 1 to 5, **characterized in that** one or two cushion strips (15) are arranged between the bead reinforcement (12) and the carcass (3, 14).

## Revendications

1. Pneumatique de véhicule pour un véhicule de tourisme, un van ou un camion léger avec une carcasse radiale (3, 3a, 14) et avec deux zones de talon (11) comportant au moins respectivement une tringle de talon (4), un bourrage sur tringle de talon (5) reposant sur la tringle de talon (4) et une bande de talon (13) délimitant la zone de talon (11) vers l'extérieur dans le plan axial, la carcasse radiale (3, 14) étant guidée de l'intérieur dans le plan axial vers l'extérieur dans le plan axial autour des tringles de talon (4) et prenant fin en une projection de carcasse (3a) et les composants disposés dans la zone de talon (11) comportant un bourrage sur tringle de talon (5), une carcasse radiale (3, 3a, 14) et une bande de talon (13) de duretés Shore A définies ;
**caractérisé en ce que** la dureté Shore A des composants (3, 3a, 5, 12, 13, 14, 15) disposés à proximité immédiate dans le plan axial dans la zone de talon (11) ne s'écarte pas de plus de 5 points de dureté Shore A d'un composant à l'autre et que les duretés Shore A des composants (3, 3a, 5, 12, 13, 14, 15) disposés à proximité immédiate dans le plan axial dans la zone de talon (11) montent ou tombent depuis le bourrage sur tringle de talon (5) vers le côté extérieur de la paroi latérale (1).

2. Pneumatique de véhicule selon la revendication 1, **caractérisé en ce que** les duretés Shore A des composants (3, 3a, 5, 12, 13, 14, 15) disposés à proximité immédiate dans le plan axial dans la zone de talon (11), de façon à tomber depuis le bourrage sur tringle de talon (5) vers le côté extérieur de la paroi latérale (1) de telle sorte que le bourrage sur tringle de talon (5) présente une dureté de 80 Shore A et que la bande de talon (13) présente une dureté de 75 Shore A, ou, de façon préférée, que le bourrage sur tringle de talon (5) présente une dureté de 70 Shore A et que la bande de talon (13) présente une dureté de 60 Shore A.

3. Pneumatique de véhicule selon la revendication 1 ou 2, **caractérisé en ce que** les duretés Shore A de tous les composants (3, 3a, 5, 12, 13, 14, 15) disposés dans la zone de talon (11), depuis le bourrage sur tringle de talon (5) vers le côté extérieur de la paroi latérale (1) se situent dans un ordre de grandeur de +/- 5 points de dureté Shore A, de préférence dans une plage de dureté de 80 - 75 Shore A.

4. Pneumatique de véhicule selon la revendication 1 ou 2, **caractérisé en ce que** la carcasse radiale (3, 14) est réalisée en une ou deux couches, sachant que dans le mode de réalisation à deux couches, les deux couches (3, 14) présentent de préférence la même dureté Shore A.

5. Pneumatique de véhicule selon l'une quelconque des revendications 1 à 4, **caractérisé en ce que** seul un renforcement de talon (12) est disposé entre la carcasse radiale (3, 14) et la bande de talon (13).

6. Pneumatique de véhicule selon l'une quelconque des revendications 1 à 5, **caractérisé en ce qu'**une ou deux bandes de rembourrage (15) sont disposées entre le renforcement de talon (12) et la carcasse (3, 14).
